# EUROPÄISCHE PATENTSCHRIFT

(11) **EP 3 932 609 B1**
(45) Veröffentlichungstag und Bekanntmachung des Hinweises auf die Patenterteilung: **26.04.2023**
(21) Anmeldenummer: 21188134.7
(22) Anmeldetag: 10.06.2015
(51) Int. Cl.: B23K 26/06, B23K 26/082, B23K 26/042

(54) **VORRICHTUNG ZUR LASERMATERIALBEARBEITUNG MIT ZWEI PARALLEL-VERSATZ-EINHEITEN DES LASERSTRAHLES**
DEVICE FOR LASER MATERIAL PROCESSING WITH TWO PARALLEL SHIFTING UNITS OF THE LASER BEAM
DISPOSITIF D'USINAGE LASER DES MATÉRIAUX AVEC DEUX UNITÉES DE DÉCALAGE PARALLÈLE DU FAISCEAU LASER

(30) Priorität: 12.06.2014 DE 102014108259
(43) Veröffentlichungstag der Anmeldung: 05.01.2022
(62) Teilanmeldung aus: 15731863.5
(73) Patentinhaber: Scanlab GmbH, 82178 Puchheim (DE)
(72) Erfinder: MÜNZER, Hans-Joachim, 82178 Puchheim (DE); VALENTIN, Martin, 82178 Puchheim (DE)
(74) Vertreter: Viering, Jentschura & Partner mbB Patent- und Rechtsanwälte

(56) Entgegenhaltungen:
- WO-A1-2013/074033
- GB-A- 2 000 321
- JP-A- 2003 161 907

## Beschreibung

Die Erfindung betrifft eine Vorrichtung zur Lasermaterialbearbeitung entsprechend dem Oberbegriff des Anspruchs 1 (siehe z.B. JP 2003/161907 A1), insbesondere eine Vorrichtung zur Lasermaterialbearbeitung, die die Führung eines Laserfokus entlang einer beliebigen Bahn ermöglicht.

Derartige Vorrichtungen zur Lasermaterialbearbeitung können zu unterschiedlichen Zwecken eingesetzt werden, z.B. bei der industriellen Lasermaterialbearbeitung. Darunter fällt das Markieren oder Beschriften, die abtragende bzw. strukturierende Bearbeitung wie das Schneiden oder Bohren, das Sintern (als Rapid Prototyping Verfahren) und das Schweißen.

Für verschiedene Anwendungen der Lasermaterialbearbeitung ist es vorteilhaft, nicht nur die Position des Laserfokus auf einer beliebigen Bahn zu führen, sondern gleichzeitig den Auftreffwinkel der Laserstrahlachse auf dem Werkstück zu kontrollieren. Dadurch lassen sich beispielsweise Strukturen beliebiger Form in ein Werkstück einbringen, deren Kanten einen gewünschten Neigungswinkel zur Werkstückoberfläche aufweisen. Idealerweise sollte der Auftreffwinkel unabhängig von der Bahnführung einstellbar sein. Die unabhängige Einstellung beider Parameter sollte mit hoher Präzision und hoher Geschwindigkeit durchführbar sein, um entsprechend hohe Bearbeitungsgeschwindigkeiten bei der Lasermaterialbearbeitung zu erzielen.

Von besonderem Interesse ist dies für das präzise Ausführen von Bohrungen, z.B. Mikrobohrungen (Ø < 500µm bzw. Ø < 200µm). Derartige Löcher werden häufig erzeugt, indem der Laserfokus auf einer Kreis- oder Spiralbahn geführt wird (Trepanierbohren und Wendelbohren). Durch die Einstellung des Auftreffwinkels der Laserstrahlachse können Löcher mit definierter Konizität hergestellt werden.

Das Dokument DE 10 2005 047 328 B3 zeigt eine Vorrichtung zum Bohren mit einem Laserstrahl, die einen drehenden Bildrotator, einen in Strahlrichtung gesehen vor dem Bildrotator angeordneten Strahlmanipulator für die Winkel- und Lageeinstellung des Strahls relativ zur Rotationsachse des Bildrotators und eine Fokussiereinrichtung ausgangsseitig des Bildrotators aufweist. Diese Vorrichtung ist hinsichtlich der Geschwindigkeit der flexiblen Einstellung des Auftreffwinkels der Laserstrahlachse auf dem Werkstück limitiert und weitgehend auf die Erzeugung kreisrunder Löcher beschränkt.

Das Dokument DE 10 2010 049 460 A1 zeigt weiterhin eine Vorrichtung zum Führen eines Lichtstrahls, insbesondere eine Trepanieroptik, mit zwei planparallelen Platten, die unabhängig voneinander rotierend angetrieben werden. Diese Vorrichtung ist ebenfalls hinsichtlich der Geschwindigkeit der flexiblen Einstellung des Auftreffwinkels der Laserstrahlachse auf dem Werkstück limitiert und weitgehend auf die Erzeugung kreisrunder Löcher beschränkt.

Das Dokument EP 1 656 234 B1 zeigt einen Scankopf als Teil einer Laser Bohr- und Schneidvorrichtung, welcher eine Taumeleinheit zur Erzeugung einer parallelen Strahlversetzung aufweist. Je nach Einstellung dieser Parallelverschiebung trifft der Strahl in unterschiedlichen Entfernungen von der optischen Achse auf eine Fokussiereinrichtung und tritt folglich unter einem entsprechenden Winkel aus der Fokussiereinrichtung aus. Somit lässt sich durch eine Einstellung der Parallelverschiebung eine Einstellung des Auftreffwinkels der Laserstrahlachse auf einem Werkstück bewirken. Durch Anordnung von zwei planparallelen optischen Platten, die um zueinander orthogonale Achsen drehbar bzw. kippbar sind, wird ein Strahlversatz in zwei Richtungen erreicht. Mit Hilfe eines Scanblocks mit zwei Spiegeln kann der Laserstrahl auf einer gewünschten Bahn geführt werden.

Weitere beispielhafte Vorrichtungen zur Lasermaterialbearbeitung sind aus den Dokumenten JP 2003 161 907 A und GB 2 000 321 A bekannt. Die Druckschrift WO 2013/074033 A1 offenbart ein Mikroskop-Beleuchtungssystem, das dazu eingerichtet ist, zwischen einem ersten Beleuchtungsmodus und einem zweiten Beleuchtungsmodus umgeschaltet zu werden.

Der parallele Strahlversatz bei planparallelen Platten ist insbesondere proportional zur Dicke und zum Auslenkwinkel der planparallelen Platte, sodass zur Erzeugung großer Parallelverschiebungen verhältnismäßig dicke und somit träge Platten eingesetzt werden müssen und/oder diese um einen großen Winkel gedreht werden müssen. Die erzielbare Geschwindigkeit bei der Einstellung der Laserstrahlachse und die damit verbundene Bearbeitungsgeschwindigkeit ist entsprechend eingeschränkt.

Wünschenswert wäre es, die parallele Strahlversetzung und somit die Einstellung des Auftreffwinkels der Laserstrahlachse mit höherer Geschwindigkeit durchführen zu können, um entsprechend hohe Bearbeitungsgeschwindigkeiten bei der Lasermaterialbearbeitung zu erzielen.

Dies wird erfindungsgemäß durch eine Vorrichtung zur Lasermaterialbearbeitung gemäß Anspruch 1 erreicht, welche eine Strahlablenkeinheit, eine Parallel-Versatz-Einheit (bzw. eine Parallelverschiebungseinheit, nachfolgend kurz als Parallel-Versatz-Einheit bezeichnet) mit wenigstens drei reflektierenden Spiegeln, wobei ein reflektierender Spiegel der wenigstens drei reflektierenden Spiegel zum Parallelversatz (bzw. zur Parallelverschiebung) des Laserstrahls drehbar ist, und eine Fokussiereinrichtung aufweist.

Eine derartige Vorrichtung zur Lasermaterialbearbeitung ermöglicht einen großen Parallelversatz (bzw. Parallelverschiebung) des Laserstrahls gegenüber einer optischen Achse mit nur geringer Drehung des drehbaren Spiegels der Parallel-Versatz-Einheit. Damit ist eine entsprechend flexible und schnelle Einstellung des Auftreffwinkels der Laserstrahlachse möglich. Hierdurch sind schnellere Bearbeitungsgeschwindigkeiten und damit kürzere Prozesszeiten bei der Lasermaterialbearbeitung erzielbar. Ferner lässt sich der Auftreffwinkel der Laserstrahlachse separat von der Bahnführung des Laserstrahls mittels der Strahlablenkeinheit einstellen. Dies stellt eine präzise Einstellung des Auftreffwinkels sowie eine präzise Bahnführung des Laserstrahls sicher. Weitere vorteilhafte Ausgestaltungen der Erfindung können aus den abhängigen Ansprüchen erhalten werden.

Die Strahlablenkeinheit weist optional zwei reflektierende Spiegel auf, die so angeordnet sind, dass der Laserstrahl entlang zweier Richtungen, die optional orthogonal zueinander sind, ablenkbar ist. Die Spiegel sind optional als Drehspiegel oder Kippspiegel ausgeführt und weiter optional mit einem schnellen Stellmittel, wie z.B. einem Galvanometerantrieb oder Piezoantrieb, gekoppelt. Bei mehreren Spiegeln ist die Anordnung optional so getroffen, dass die Spiegel zueinander orthogonal angeordnet sind. Damit lässt sich der (z.B. bereits fokussierte oder zu fokussierende) Laserstrahl in x- und in y-Richtung bezogen auf eine Werkstückoberfläche lenken, wodurch eine gleichzeitige zweidimensionale Ablenkung des Laserstrahls möglich ist. Ferner sind mit Galvanometerantrieben hohe Bahngeschwindigkeiten möglich.

Weiter optional ist die Strahlablenkeinheit zwischen der Parallel-Versatz-Einheit und der Fokussiereinrichtung angeordnet. Beispielsweise kann die Strahlablenkeinheit in Ausbreitungsrichtung des Laserstrahls unmittelbar nach der Parallel-Versatz-Einheit und unmittelbar vor der Fokussiereinrichtung angeordnet sein. Unmittelbar nach bzw. unmittelbar vor kann hierin bedeuten, dass keine weitere (optische) Komponente zwischen zwei Komponenten geschaltet ist. Alternativ oder ergänzend kann die Vorrichtung zur Lasermaterialbearbeitung ein oder mehrere weitere Komponenten aufweisen, die zwischen der Strahlablenkeinheit und der Fokussiereinrichtung angeordnet ist bzw. sind.

Die Parallel-Versatz-Einheit weist mindestens drei Spiegel auf, wobei ein reflektierender Spiegel der wenigstens drei reflektierenden Spiegel zur Parallelverschiebung des Laserstrahls drehbar ist und zwei Spiegel feststehend ausgeführt sind. Um eine kompakte Ausgestaltung der Parallel-Versatz-Einheit zu realisieren, ist die Parallel-Versatz-Einheit optional so ausgestaltet, dass der Laserstrahl mittels der Spiegelanordnung viermal reflektiert wird, wobei die Eintritts- und Austrittsreflexion (mit anderen Worten die erste und die letzte Reflexion) in der Parallel-Versatz-Einheit am drehbaren, reflektierenden Spiegel erfolgen. Der drehbare Spiegel der Parallel-Versatz-Einheit ist optional als Drehspiegel oder Kippspiegel ausgeführt und weiter optional mit einem schnellen Stellmittel, wie z.B. einem Galvanometerantrieb, gekoppelt. Hiermit lässt sich eine schnelle Parallelverschiebung des Laserstrahls erzielen.

Optional sind die Spiegel der Parallel-Versatz-Einheit im Wesentlichen dreieckförmig angeordnet. Durch Änderung der Abstände zwischen den Spiegeln der Parallel-Versatz-Einheit kann der gewünschte Parallelversatz (bzw. Parallelverschiebung) pro Drehwinkel des drehbaren Spiegels eingestellt werden. Je größer der Abstand zwischen den Spiegeln ausgewählt wird, desto größer wird der dadurch erzielbare Parallelversatz des Laserstrahls pro Drehwinkel des drehbaren Spiegels.

Die Vorrichtung weist ferner entsprechend der Erfindung eine weitere Parallel-Versatz-Einheit zum Parallelversatz (bzw. Parallelverschiebung) des Laserstrahls auf, wobei die Parallel-Versatz-Einheiten derart miteinander optisch gekoppelt sind, dass der durch die zwei Parallel-Versatz-Einheiten passierende Laserstrahl entlang zweier Parallelversatzrichtungen (bzw. Parallelverschieberichtungen), die optional orthogonal zueinander sind, parallel versetzbar ist. Die weitere Parallel-Versatz-Einheit ist wie die bereits erläuterte Parallel-Versatz-Einheit ausgestaltet. Sie kann mindestens drei reflektierende Spiegel aufweisen, wobei ein reflektierender Spiegel der wenigstens drei reflektierenden Spiegel zum Parallelversatz (bzw. Parallelverschiebung) des Laserstrahls drehbar ist und zwei Spiegel feststehend ausgeführt sind. Durch die erste Parallel-Versatz-Einheit ist ein Parallelversatz (bzw. Parallelverschiebung) in eine erste Parallelversatzrichtung (bzw. Parallelverschieberichtung) erzeugbar, und durch die zweite Parallel-Versatz-Einheit ist ein Parallelversatz in eine zweite Parallelversatzrichtung, die optional orthogonal zur ersten Parallelversatzrichtung ist, erzeugbar. Mit Hilfe von zwei Parallel-Versatz-Einheiten lässt sich der Laserstrahl dann in zwei Raumrichtungen parallel versetzen, mit anderen Worten gesteuert verschieben. Damit lässt sich der Auftreffwinkel der Laserstrahlachse in zwei Raumrichtungen einstellen und eine entsprechend flexible Lasermaterialbearbeitung, z.B. zur Erzeugung von konischen Bohrungen, wird ermöglicht.

Optional ist ein Strahlteiler vorgesehen, der in Ausbreitungsrichtung des Laserstrahls vor, optional unmittelbar vor, der Fokussiereinrichtung vorgesehen ist. Der Strahlteiler kann eingerichtet sein, den Laserstrahl und/oder über die Fokussiereinrichtung erfasste elektromagnetische Strahlung (z.B. Licht) aus dem Strahlengang des Lasers auszukoppeln. Um die Erfassung der elektromagnetischen Strahlung (z.B. Licht) über die Fokussiereinrichtung zu verbessern, kann eine Beleuchtung für das Werkstück vorgesehen sein. Der Strahlteiler ist optional für eine Strahlbeobachtung und/oder Prozessbeobachtung an der Werkstückoberfläche vorgesehen.

Optional ist eine Beobachtungseinrichtung vorgesehen, die mit dem Strahlteiler optisch gekoppelt ist und eingerichtet ist, den ausgekoppelten Laserstrahl und/oder die ausgekoppelte elektromagnetische Strahlung (z.B. Licht) zu erfassen.

Die Vorrichtung zur Lasermaterialbearbeitung weist optional eine Steuervorrichtung auf, die ausgestaltet ist, die Parallel-Versatz-Einheit, die Strahlablenkeinheit und/oder die Fokussiereinheit zu steuern bzw. zu regeln. Die Steuervorrichtung kann so eingerichtet sein, eine synchronisierte Ansteuerung der Strahlablenkeinheit, der Parallel-Versatz-Einheit, der Fokussiereinrichtung und/oder einer Laserquelle zu implementieren. Die Komponenten der Vorrichtung zur Lasermaterialbearbeitung sind so synchron ansteuerbar.

Zur Anpassung des Laserfokusdurchmessers auf der Bearbeitungsfläche des Werkstücks ist optional eine Strahlformungseinrichtung (z.B. eine Strahlaufweitungseinrichtung oder eine Strahlverkleinerungseinrichtung) zur Änderung des Laserstrahldurchmessers vorgesehen, die in Ausbreitungsrichtung des Laserstrahls vor, optional unmittelbar vor, der Parallel-Versatz-Einheit angeordnet ist. Bevorzugt ist die Strahlformungseinrichtung als variable Strahlformungseinrichtung ausgeführt, deren Formungsfaktor wie z.B. Aufweitungsfaktor oder Verkleinerungsfaktor stufenlos einstellbar ist. Die Strahlformungseinrichtung kann beispielsweise mittels eines Teleskopes realisiert sein.

Optional ist eine Polarisatoreinrichtung vorgesehen, die in Ausbreitungsrichtung des Laserstrahls vor, optional unmittelbar vor, der Parallel-Versatz-Einheit und gegebenenfalls nach, optional unmittelbar nach, der Strahlformungseinrichtung angeordnet ist. Die Polarisatoreinrichtung umfasst eine Baugruppe, die die Einstellung einer gewünschten Polarisationsart, zum Beispiel lineare Polarisation oder zirkulare Polarisation oder elliptische Polarisation, ermöglicht. Optional ist die Polarisatoreinrichtung eingerichtet, eine dynamisch anpassbare Polarisation zu erzeugen. Die Polarisatoreinrichtung kann ein Bewegungsmittel umfassen, das eine an die Bewegung des Strahls angepasste dynamische Einstellung der Polarisation ermöglicht.

Die Vorrichtung zur Lasermaterialbearbeitung kann eine Einrichtung zur Fokuslageverschiebung des Laserstrahls aufweisen, die in Ausbreitungsrichtung des Laserstrahls vor, optional unmittelbar vor, der Fokussiereinrichtung und optional unmittelbar vor oder optional unmittelbar nach der Strahlablenkeinheit angeordnet ist. Hierdurch ist die Variation der Fokuslage, d.h. die Positionierung des Laserfokus entlang einer z-Richtung, möglich. Somit wird eine dreidimensionale Bearbeitung des Werkstücks ermöglicht. Die Einrichtung zur Fokuslageverschiebung kann so ausgestaltet sein, dass ein optisches Element oder eine optische Baugruppe entlang der Ausbreitungsrichtung des Laserstrahls relativ zu einer feststehenden Optik verschiebbar ist, um dadurch die Fokuslage abhängig von der Verschiebung zu verändern. Die Einrichtung zur Fokuslageverschiebung kann in die Fokussiereinrichtung integriert sein. Alternativ oder ergänzend kann auch die Fokussiereinrichtung mittels eines Stellmittels verschiebbar sein.

Die Erfindung wird im Folgenden anhand von Ausführungsbeispielen mit Bezugnahme auf die beiliegenden Zeichnungen erläutert.

In den Zeichnungen zeigen:
Fig. 1 eine schematische Ansicht einer Vorrichtung zur Lasermaterialbearbeitung gemäß der vorliegenden Erfindung;
Fig. 2 eine schematische Ansicht einer Parallel-Versatz-Einheit gemäß der vorliegenden Erfindung;
Fig. 3 eine schematische Ansicht zur Erläuterung des Parallelversatzes; und
Fig. 4 eine schematische Ansicht einer Vorrichtung zur Lasermaterialbearbeitung gemäß der vorliegenden Erfindung gemäß einem weiteren Ausführungsbeispiel.

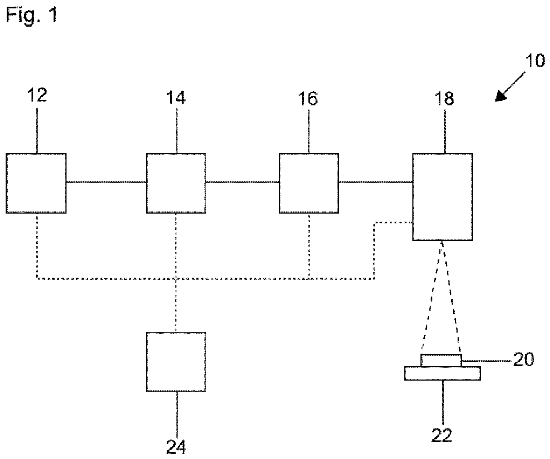

In Fig. 1 ist eine schematische Ansicht einer Vorrichtung 10 zur Lasermaterialbearbeitung gemäß der vorliegenden Erfindung gezeigt. Die Vorrichtung kann eine Laserquelle 12 aufweisen oder im Strahlengang eines Laserstrahls aus einer Laserquelle 12 angeordnet sein. Der Laserstrahl kann beispielsweise ein kontinuierlicher Laserstrahl oder ein gepulster Laserstrahl (z.B. ein Ultrakurzpulslaserstrahl) sein. Die Vorrichtung 10 weist ferner eine Parallel-Versatz-Einheit 14, eine Strahlablenkeinheit 16 und eine Fokussiereinrichtung 18 auf, die im Fall von Fig. 1 beispielsweise nacheinander in dieser Reihenfolge angeordnet sind.

Die Strahlablenkeinheit 16 weist optional zwei bewegliche Spiegel (z.B. mit Galvanometerantrieb) zur Ablenkung des Laserstrahls entlang zweier Richtungen auf. Der erste reflektierende Spiegel kann eine erste Ablenkung des Laserstrahls entlang einer ersten Richtung, z.B. eine x-Richtung, bezogen auf eine Oberfläche des Werkstücks 20 bewirken. Entsprechend kann die erste Ablenkung innerhalb eines ersten Winkelbereichs erfolgen. Die erste Ablenkung in der Strahlablenkeinheit kann also zunächst eindimensional erfolgen. Bei Vorsehen eines zweiten reflektierenden Spiegels ist dieser optional nach dem ersten reflektierenden Spiegel geschaltet und im Strahlengang des durch den ersten reflektierenden Spiegel abgelenkten Laserstrahls angeordnet. Hierdurch kann der zunächst eindimensional abgelenkte Laserstrahl mittels des zweiten reflektierenden Spiegels entlang einer zweiten Richtung, z.B. einer y-Richtung, bezogen auf eine Oberfläche des Werkstücks 20 abgelenkt werden, wobei die erste und die zweite Richtung optional orthogonal zueinander ausgerichtet sind. Die zweite Ablenkung kann also innerhalb eines zweiten Winkelbereichs erfolgen und somit eine zweidimensionale Ablenkung in der Strahlablenkeinheit 16 ermöglichen. Durch Überlagerung der beiden Ablenkungen in x-Richtung und y-Richtung ist folglich eine beliebige Bahn auf der Oberfläche des Werkstücks 20 realisierbar.

Das zu bearbeitende Werkstück 20 kann in einem Werkstückhalter 22 angeordnet und/oder gehalten sein. Die Oberfläche des Werkstücks 20 kann eine x-Richtung und/oder y-Richtung definieren. Mit Hilfe von schnellen beweglichen Spiegeln in der Strahlablenkeinheit 16 wie z.B. Spiegeln mit Galvanometerantrieb ist somit eine schnelle und präzise Positionierung in x-Richtung und y-Richtung erzielbar. Bei einer gewünschten Relativbewegung des Werkstücks 20 zum Laser kann der Werkstückhalter 22 mit Hilfe eines Stellmittels verfahrbar ausgestaltet sein.

Die Vorrichtung 10 zur Lasermaterialbearbeitung kann eine Steuervorrichtung 24 aufweisen, die eingerichtet ist, die Parallel-Versatz-Einheit 14, die Strahlablenkeinheit 16 und/oder die Fokussiereinrichtung 18 zu steuern bzw. zu regeln. Im Falle einer Regelung sind ferner Sensoren (nicht dargestellt) zur Erfassung von Parametern und/oder Statusinformationen vorgesehen, die z.B. die Position des Laserstrahls erfassen können. Dies ermöglicht die verbesserte Einstellung des Laserstrahls zur Prozessoptimierung oder Kalibrierung.

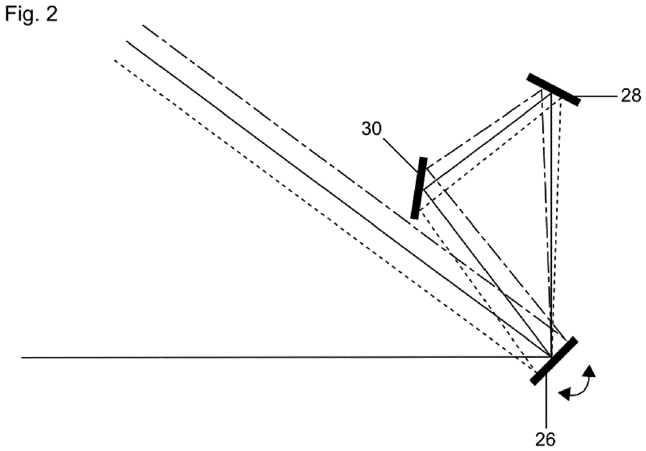

In Fig. 2 ist eine schematische Ansicht der Parallel-Versatz-Einheit 14. Die Parallel-Versatz-Einheit weist einen drehbaren, reflektierenden Spiegel (z.B. mit Galvanometerantrieb) 26 und zwei feststehende, reflektierende Spiegel 28 und 30 auf. Dabei kann es so sein, dass ein zu versetzender Laserstrahl in diesem Fall von links unten kommend zunächst auf den drehbaren, reflektierenden Spiegel 26 trifft, hin zu einem ersten feststehenden Spiegel 28 und dann zu einem zweiten feststehenden Spiegel 30 abgelenkt wird und schließlich erneut am drehbaren, reflektierenden Spiegel 26 reflektiert wird.

Wie durch die gestrichelten Linien in Fig. 2 verdeutlicht, divergieren die in der Spiegelanordnung umlaufenden Laserstrahlen bis zur erneuten Reflexion am drehbaren, reflektierenden Spiegel gegenüber einer optischen Achse voneinander. Der erzielbare Parallelversatz (bzw. Parallelverschiebung) pro Drehwinkel des drehbaren Spiegels ist in Abhängigkeit von dem Abstand der Spiegel zueinander einstellbar.

Wie aus Fig. 2 ersichtlich, kann die Parallel-Versatz-Einheit 14 so ausgestaltet sein, dass der Laserstrahl mittels der Spiegelanordnung viermal reflektiert wird. Die Eintritts- und Austrittsreflexion, also die erste und die letzte Reflexion, in der Parallel-Versatz-Einheit 14 können am drehbaren, reflektierenden Spiegel 26 erfolgen. Dieser kompensiert hierdurch die Winkeldifferenzen der umlaufenden Laserstrahlen und erlaubt es, dass der aus der Parallel-Versatz-Einheit 14 austretende Laserstrahl vom Drehwinkel des drehbaren Spiegels 26 abhängig parallel versetzt wird. Die Parallel-Versatz-Einheit kann auch mit einer anderen geraden Anzahl fester Spiegel ausgeführt werden.

Bei dem in Fig. 2 gezeigten Ausführungsbeispiel sind die Spiegel 26, 28, 30 der Parallel-Versatz-Einheit 14 im Wesentlichen dreieckförmig angeordnet.

Optional sind die Spiegel 26, 28, 30 so eingerichtet, dass der in die Parallel-Versatz-Einheit 14 einfallende Laserstrahl, die in der Parallel-Versatz-Einheit 14 umlaufenden Strahlen und/oder der aus der Parallel-Versatz-Einheit 14 ausfallende Laserstrahl im Wesentlichen komplanar sind bzw. in einer Ebene liegen. Die Spiegel 26, 28, 30 der Parallel-Versatz-Einheit 14 können so eingerichtet sein, dass die Normalen auf den Spiegelflächen der Spiegel der Parallel-Versatz-Einheit (mit anderen Worten die Flächennormalen der Spiegel) in einer Ebene liegen.

Die reflektierenden Spiegel der Parallel-Versatz-Einheit 14 und der bzw. die Spiegel der Strahlablenkeinheit 16 sind optional als Planspiegel, also im Wesentlichen ohne Oberflächenkrümmung, ausgeführt. Ferner können die Spiegel eine oder mehrere Beschichtungen für bestimmte Laserwellenlängen und/oder Laserleistungen aufweisen. Der drehbare Spiegel 26 der Parallel-Versatz-Einheit 14 und/oder der bzw. die Spiegel zum Ablenken in der Strahlablenkeinheit 16 sind weiter optional für ein geringes Trägheitsmoment ausgestaltet. In der Strahlablenkeinheit 16 ermöglicht dies eine schnelle Positionierung des bzw. der Spiegel(s) zur Ablenkung von Laserstrahlen, und in der Parallel-Versatz-Einheit 14 ermöglicht dies einen schnellen Parallelversatz (bzw. Parallelverschiebung) von Laserstrahlen zur Einstellung des Auftreffwinkels der Laserstrahlachse.

Um eine Parallelverschiebung des Laserstrahls in zwei Raumrichtungen zu ermöglichen, sind entsprechend der Erfindung zwei Parallel-Versatz-Einheiten hintereinandergeschaltet und so miteinander optisch gekoppelt, dass der Laserstrahl entlang zweier Parallelversatzrichtungen (bzw. Parallelverschieberichtungen), die optional orthogonal zueinander sind, parallel versetzbar (bzw. verschiebbar) ist. Die weitere (zweite) Parallel-Versatz-Einheit weist wenigstens drei reflektierende Spiegel auf, wobei ein reflektierender Spiegel der wenigstens drei reflektierenden Spiegel zum Parallelversatz des Laserstrahls in der zweiten Parallel-Versatz-Einheit drehbar ist. Hierdurch lässt sich der durch die zwei Parallel-Versatz-Einheiten passierende Laserstrahl entlang zweier Raumrichtungen parallel versetzen. Dies ermöglicht es, den Auftreffwinkel der Laserstrahlachse in zwei Richtungen, z.B. in x- und in y-Richtung, bezogen auf die Werkstückoberfläche zu neigen. Hierdurch lassen sich z.B. konische Bohrungen oder Schnitte mit definierten Kantenwinkeln herstellen.

Optional ist die Anordnung der Spiegel der zwei Parallel-Versatz-Einheiten so getroffen, dass der in die erste Parallel-Versatz-Einheit 14 einfallende Laserstrahl, die in der ersten Parallel-Versatz-Einheit 14 umlaufenden Strahlen und/oder der aus der ersten Parallel-Versatz-Einheit 14 ausfallende Laserstrahl im Wesentlichen komplanar sind und der in die zweite Parallel-Versatz-Einheit 14 einfallenden Laserstrahl, die in der zweiten Parallel-Versatz-Einheit 14 umlaufenden Strahlen und/oder der aus der zweiten Parallel-Versatz-Einheit 14 ausfallende Laserstrahl im Wesentlichen komplanar sind. Die Spiegel 26, 28, 30 der ersten und der zweiten Parallel-Versatz-Einheit 14 können so angeordnet sein, dass die Normalen auf den Spiegelflächen jeweils in einer Ebene liegen.

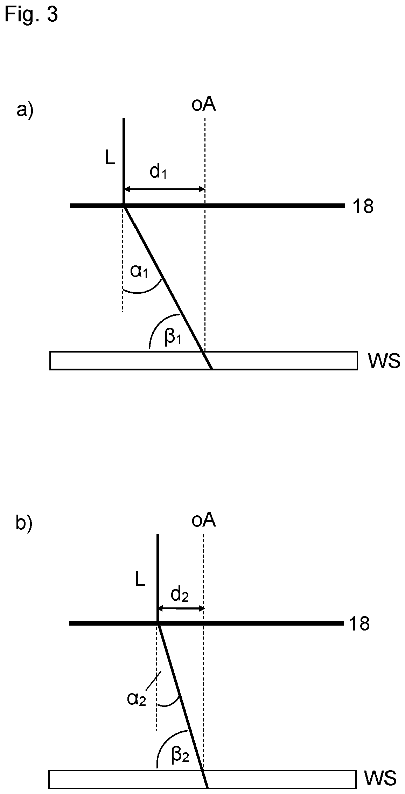

Fig. 3 ist eine schematische Ansicht, die erläutert, wie durch die Einstellung des Parallelversatzes (bzw. Parallelverschiebung) der Auftreffwinkel der Laserstrahlachse auf dem Werkstück variiert wird. Der Laserstrahl L stellt den mittels der Parallel-Versatz-Einheit 14 parallel zur optischen Achse oA versetzten (bzw. verschobenen) Laserstrahl dar. Dieser parallel versetzte Laserstrahl L kann - wie in Fig. 3 gezeigt - auf die Fokussiereinrichtung (z.B. eine Linse) 18 treffen. Im Fall der in Fig. 1 beispielhaft gezeigten Anordnung ist die Strahlablenkeinheit 16 zur Bahnführung des Laserstrahls auf der Werkstückoberfläche zwischen der Parallel-Versatz-Einheit 14 und der Fokussiereinrichtung 18, nämlich unmittelbar nach der Parallel-Versatz-Einheit 14 und unmittelbar vor der Fokussiereinrichtung 18, angeordnet.

Der Abstand d des radialen Auftreffpunkts des Laserstrahls L auf der Fokussiereinrichtung 18 zur optischen Achse oA kann durch den Versatz (bzw. Verschiebung) des Laserstrahls L parallel zur optischen Achse oA mit Hilfe der Parallel-Versatz-Einheit 14 eingestellt werden. Der Neigungswinkel α, unter dem der Laserstrahl aus der Fokussiereinrichtung 18 austritt, variiert - wie in Fig. 3 verdeutlicht - mit dem Abstand d des radialen Auftreffpunkts des Laserstrahls L zur optischen Achse oA. Wird die Position des Werkstücks WS nicht verändert, ändert sich mit dem Neigungswinkel α, unter dem die Laserstrahlachse aus der Fokussiereinrichtung 18 austritt, auch der Auftreffwinkel β der Laserstrahlachse auf dem Werkstück WS. Trifft der Laserstrahl L, wie hier zur beispielhaften Erläuterung gezeigt, parallel zur optischen Achse oA auf die Fokussiereinrichtung 18, also ohne Ablenkung durch die Strahlablenkeinheit 16, liegt der Laserfokus, welcher zur Bearbeitung auf der Werkstückoberfläche positioniert wird, auf der optischen Achse oA. Ist der Laserstrahl L beim Auftreffen auf der Fokussiereinrichtung 18 gegen die optische Achse oA geneigt, dann liegt der Laserfokus, welcher zur Bearbeitung auf der Werkstückoberfläche positioniert wird, nicht auf der optischen Achse oA.

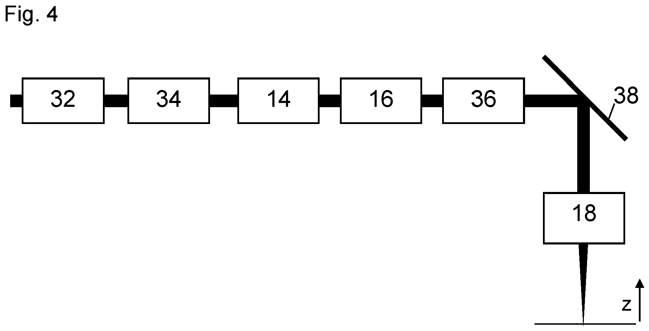

Fig. 4 zeigt eine schematische Ansicht einer Vorrichtung 10 zur Lasermaterialbearbeitung gemäß der vorliegenden Erfindung gemäß einem weiteren Ausführungsbeispiel. Die Vorrichtung zur Lasermaterialbearbeitung kann eine Strahlformungseinrichtung (z.B. eine Strahlaufweitungseinrichtung) 32, eine Polarisatoreinrichtung 34, eine Einrichtung zur Fokuslageverschiebung 36 und einen Strahlteiler 38 aufweisen.

Die Strahlformungseinrichtung 32 zur Änderung des Laserstrahldurchmessers kann in Ausbreitungsrichtung des Laserstrahls vor, optional unmittelbar vor, der Parallel-Versatz-Einheit 14 angeordnet sein. Die Strahlformungseinrichtung (z.B. die Strahlaufweitungseinrichtung oder Strahlverkleinerungseinrichtung) 32 kann beispielsweise durch ein Teleskop realisiert sein. Die Anordnung der Strahlformungseinrichtung 32 kann so getroffen sein, dass diese zwischen der Laserquelle 12 und der Polarisatoreinrichtung 34, optional unmittelbar nach der Laserquelle 12 oder optional unmittelbar vor der Polarisatoreinrichtung 34, geschaltet ist. Bei Vorsehen einer Strahlformungseinrichtung 32 in Form einer Strahlaufweitungseinrichtung kann diese einen größeren Laserstrahldurchmesser erzeugen, der über die Fokussiereinrichtung 18 (z.B. einer Einzellinse oder einem Linsensystem) einen kleineren Laserfokusdurchmesser ermöglicht.

Die Polarisatoreinrichtung 34 kann in Ausbreitungsrichtung des Laserstrahls vor, optional unmittelbar vor, der Parallel-Versatz-Einheit 14 und nach, optional unmittelbar nach, der Strahlformungseinrichtung 32 angeordnet sein. Die Polarisatoreinrichtung 34 umfasst eine Baugruppe, die die Einstellung einer gewünschten Polarisationsart, zum Beispiel lineare Polarisation oder zirkulare Polarisation oder elliptische Polarisation, ermöglicht. Optional kann die Polarisatoreinrichtung ein Bewegungsmittel umfassen, das eine an die Bewegung des Strahls angepasste dynamische Einstellung der Polarisation ermöglicht.

Wie aus Fig. 4 ersichtlich, kann die Vorrichtung 10 zur Lasermaterialbearbeitung ferner eine Einrichtung zur Fokuslageverschiebung 36 aufweisen, mittels derer die Fokuslage entlang der optischen Achse, d.h. entlang der eingezeichneten z-Richtung, verschoben werden kann. Die Einrichtung zur Fokuslageverschiebung 36 kann in Ausbreitungsrichtung des Laserstrahls vor der Fokussiereinrichtung 18 und optional unmittelbar vor oder unmittelbar nach der Strahlablenkeinheit 16 angeordnet sein. Die Einrichtung zur Fokuslageverschiebung 36 kann ein optisches Element oder eine optische Baugruppe aufweisen, das bzw. die entlang der Ausbreitungsrichtung des Laserstrahls relativ zu einer (z.B. feststehenden) Optik verschiebbar ist. Grundsätzlich kann auch die Fokussiereinrichtung 18 mittels eines Stellmittels verfahrbar ausgestaltet sein, um eine stufenlose Einstellung des Arbeitsabstandes zu ermöglichen. Durch die Einrichtung zur Fokuslageverschiebung 36 ist die Fokuslage am Werkstück 20 variierbar und eine Bearbeitung des Werkstücks 20 entlang einer z-Richtung (also entlang einer optischen Achse) ist realisierbar.

Im Fall von Fig. 4 ist optional ein Strahlteiler 38 vorgesehen, der so ausgestaltet ist, dass der Laserstrahl und/oder eine über die Fokussiereinrichtung 18 erfasste elektromagnetische Strahlung (z.B. Licht) aus dem Strahlengang des Lasers, beispielsweise zur Strahlüberwachung oder Prozessüberwachung, auskoppelbar sind. Der Strahlteiler 38 ist beispielsweise in Ausbreitungsrichtung des Laserstrahls nach der Strahlablenkeinheit 16 und vor, optional unmittelbar vor, der Fokussiereinrichtung 18 angeordnet.

Mit dem dargestellten Strahlteiler 38 lässt sich erreichen, dass der an dieser Stelle ausgekoppelte Laserstrahl und/oder die ausgekoppelte elektromagnetische Strahlung (z.B. Licht), welche über die Fokussiereinrichtung 18 erfasst wird, zu einer optional vorgesehenen Beobachtungseinrichtung (nicht dargestellt) gelenkt werden.

Die Beobachtungseinrichtung kann ferner einen Kamera-Sensor aufweisen, der z.B. über ein Kamera-Objektiv mit dem Strahlteiler 38 optisch gekoppelt ist. Der Laserstrahl und/oder die über die Fokussiereinrichtung 18 erfasste elektromagnetische Strahlung (z.B. Licht) der Werkstückoberfläche können dann zum Strahlteiler 38 geführt werden, am Strahlteiler 38 aus dem Strahlengang des Lasers ausgekoppelt werden und schließlich zum Kamera-Sensor zur Prozessbeobachtung gelenkt werden. Die Steuervorrichtung 24 kann so ausgestaltet und eingerichtet sein, die Parallel-Versatz-Einheit 14, die Strahlablenkeinheit 16, die Fokussiereinrichtung 18 sowie gegebenenfalls weitere Komponenten wie Laserquelle 12, Einrichtung zur Fokuslageverschiebung 36, Strahlformungseinrichtung 32 und Polarisatoreinrichtung 34 anzusteuern.

Die Fokussiereinrichtung 18 zum Fokussieren des Laserstrahls kann als Einzellinse, Linsensystem oder Spiegelsystem ausgeführt sein. Vorzugsweise ist die Fokussiereinrichtung 18 feststehend ausgeführt und die Variierung der Fokuslage ist dann durch die Einrichtung zur Fokuslageverschiebung 36 realisiert.

Alternativ oder ergänzend kann die Einrichtung zur Fokuslageverschiebung 36 zwischen der Parallel-Versatz-Einheit 14 und der Strahlablenkeinheit 16, optional unmittelbar nach der Parallel-Versatz-Einheit 14 oder optional unmittelbar vor der Strahlablenkeinheit 16, geschaltet sein. Die übrigen Komponenten können ferner wie oben erläutert ausgestaltet sein.

Es ist darauf hinzuweisen, dass die Fokussiereinrichtung 18 grundsätzlich auch vor, optional unmittelbar vor, der Strahlablenkeinheit 16 angeordnet sein kann. Weiterhin kann die Fokussiereinrichtung 18 auch mit der Einrichtung zur Fokuslageverschiebung 36 kombiniert und in integrierter Weise ausgebildet sein.

Grundsätzlich kann der oben erläuterte Strahlteiler 38 auch an anderer Stelle im Strahlengang des Lasers angeordnet sein. Beispielsweise kann die Anordnung des Strahlteilers 38 so getroffen werden, dass der Laserstrahl in Ausbreitungsrichtung betrachtet vor, optional unmittelbar vor, der Fokussiereinrichtung 18 auskoppelbar ist.

Im Sinne einer flexiblen Anpassung der Vorrichtung 10 zur Lasermaterialbearbeitung können die Parallel-Versatz-Einheit 14, die Strahlablenkeinheit 16, die Fokussiereinrichtung 18 sowie gegebenenfalls weitere Komponenten wie die Laserquelle 12, Strahlformungseinrichtung 32, Polarisatoreinrichtung 34, Einrichtung zur Fokuslageverschiebung 36 und Strahlteiler 38 modular ausgeführt und austauschbar ausgestaltet sein.

Weiter optional ist vorgesehen, dass die Vorrichtung 10 zur Lasermaterialbearbeitung eine Gasdüse aufweist, die ausgestaltet ist, einen gerichteten Gasstrahl auf die Werkstückoberfläche zu erzeugen. Dies ermöglicht es, die Bearbeitungsqualität zu verbessern. Als Gas kann insbesondere ein reaktionsträges oder inertes Gas wie z.B. Stickstoff eingesetzt werden. Die Ausgestaltung der Gasdüse kann an den Laserbearbeitungsprozess angepasst sein.

Zur Verbesserung der Präzision bei der Lasermaterialbearbeitung ist weiter optional ein Strahlrotator vorgesehen, der ausgestaltet ist, ein um eine Rotationsachse rotierendes Intensitätsprofil des Laserstrahls zu erzeugen. In diesem Fall kann der Strahlrotator in Ausbreitungsrichtung des Laserstrahls ein oder mehrere rotierende optische Elemente aufeinanderfolgend aufweisen. Der Strahlrotator kann insbesondere mittels einer Prismen- oder Spiegelanordnung, zum Beispiel eines Wendeprismas (Dove-Prismas), realisiert sein. Die Rotation der Intensitätsverteilung des Laserstrahls verbessert insbesondere die Rundheit der Bohrungen.

Die Steuervorrichtung 24 kann ferner so eingerichtet sein, dass eine synchronisierte Ansteuerung der Strahlablenkeinheit 16, der Parallel-Versatz-Einheit 14, der Fokussiereinrichtung 18, der Einrichtung zur Fokuslageverschiebung 36 und/oder der Laserquelle 12 implementiert ist. Die Ansteuerung der Komponenten kann insbesondere digital erfolgen, wobei optional separate Ansteuerkarten für die einzelnen Komponenten (z.B. die Strahlablenkeinheit, Parallel-Versatz-Einheit usw.) vorgesehen sind. Die Ansteuerkarten können über eine zentrale Steuervorrichtung, z.B. einer geeigneten Software auf einem Rechner oder einer Rechner-unabhängigen Steuereinheit, gesteuert werden. Die Ansteuerkarten stellen eine synchrone und störsichere Steuerung der Komponenten sicher.

Schließlich darf darauf hingewiesen werden, dass es sich bei der Vorrichtung zur Lasermaterialbearbeitung optional um eine Vorrichtung zur Lasermaterialbearbeitung für das Ausführen von Bohrungen, optional Mikrobohrungen, handeln kann, wobei die Bohrdurchmesser im Mikrometerbereich, optional unter 500 µm oder optional unter 200 µm, liegen können.

Grundsätzlich kann die vorliegende Erfindung auch eine Vorrichtung zur Lasermaterialbearbeitung (bzw. Lasermaterialbearbeitungsvorrichtung) in Kombination mit einem zu bearbeitenden Material, optional mit einem zu laserbearbeitenden Plattenmaterial, betreffen.

## Patentansprüche

1. Vorrichtung (10) zur Lasermaterialbearbeitung, aufweisend
eine Strahlablenkeinheit (16) mit wenigstens einem reflektierenden Spiegel, der als Dreh- oder Kippspiegel ausgeführt ist, zum Ablenken eines Laserstrahls, welcher eine Laserstrahlachse definiert, entlang einer ersten Richtung bezogen auf eine Oberfläche eines zu bearbeitenden Werkstücks (20) zur Bahnführung des Laserstrahls auf der Oberfläche des Werkstücks (20),
**gekennzeichnet durch**:
eine Parallel-Versatz-Einheit (14) mit wenigstens drei reflektierenden Spiegeln (26, 28, 30) zum Parallelverschieben des Laserstrahls, gegenüber einer optischen Achse (oA), entlang einer ersten Parallelversatzrichtung, wobei ein reflektierender Spiegel (26) der wenigstens drei reflektierenden Spiegel zum Parallelversatz des Laserstrahls drehbar ist und die Eintrittsreflexion und die Austrittsreflexion am drehbaren, reflektierenden Spiegel (26) erfolgen,
eine weitere Parallel-Versatz-Einheit, die wie die Parallel-Versatz-Einheit (14) ausgebildet ist, zum Parallelverschieben des Laserstrahls entlang einer zweiten Parallelversatzrichtung, wobei die Parallel-Versatz-Einheiten derart miteinander optisch gekoppelt sind, dass der Laserstrahl entlang zweier unterschiedlicher Parallelversatzrichtungen parallel versetzbar ist, und
eine Fokussiereinrichtung (18) zum Fokussieren des mittels der Parallel-Versatz-Einheiten parallelverschobenen und mittels der Strahlablenkeinheit (16) abgelenkten Laserstrahls auf das Werkstück (20), wobei
durch die Einstellung der mittels der Parallel-Versatz-Einheiten erfolgenden Parallelverschiebungen der Auftreffwinkel der Laserstrahlachse auf dem Werkstück in zwei Raumrichtungen variierbar ist.

2. Vorrichtung nach Anspruch 1, wobei die Strahlablenkeinheit (16) einen zweiten reflektierenden Spiegel aufweist, der als Dreh- oder Kippspiegel ausgeführt ist und dem ersten reflektierenden Spiegel im Strahlengang nachgeschaltet ist, zum Ablenken des Laserstrahls entlang einer zweiten Richtung bezogen auf die Oberfläche des zu bearbeitenden Werkstücks (20), wodurch eine zweidimensionale Ablenkung des Laserstrahls zur entsprechenden Bahnführung des Laserstrahls auf der Oberfläche des Werkstücks (20) ermöglicht ist.

3. Vorrichtung nach Anspruch 1 oder 2, wobei die Parallel-Versatz-Einheit (14) mit einer geraden Anzahl fester Spiegel ausgeführt ist.

4. Vorrichtung nach einem der Ansprüche 1 bis 3, wobei die Parallel-Versatz-Einheit (14) so ausgestaltet ist, dass der Laserstrahl mittels der Spiegelanordnung viermal reflektiert wird.

5. Vorrichtung nach einem der Ansprüche 1 bis 4, bei der die Spiegel (26, 28, 30) der Parallel-Versatz-Einheit (14) so eingerichtet sind, dass die Normalen auf den Spiegelflächen der Spiegel der Parallel-Versatz-Einheit in einer Ebene liegen.

6. Vorrichtung nach einem der Ansprüche 1 bis 5 mit einer Einrichtung zur Fokuslageverschiebung (36) des Laserstrahls, die in Ausbreitungsrichtung des Laserstrahls vor der Fokussiereinrichtung (18) und optional nach der Strahlablenkeinheit (16) angeordnet ist.

7. Vorrichtung nach einem der Ansprüche 1 bis 6 mit einer Steuervorrichtung (24), die so eingerichtet ist, dass eine synchronisierte Ansteuerung der Strahlablenkeinheit (16), der Parallel-Versatz-Einheit (14), der Fokussiereinrichtung (18), einer Einrichtung zur Fokuslageverschiebung (36) und/oder einer Laserquelle (12) implementiert ist.

8. Vorrichtung nach einem der Ansprüche 1 bis 7 mit einem Strahlteiler (38), der in Ausbreitungsrichtung des Laserstrahls vor, optional unmittelbar vor, der Fokussiereinrichtung (18) vorgesehen ist und eingerichtet ist, den Laserstrahl und/oder über die Fokussiereinrichtung (18) erfasste elektromagnetische Strahlung aus dem Strahlengang des Lasers auszukoppeln.

9. Vorrichtung nach Anspruch 8 mit einer Beobachtungseinrichtung, die mit dem Strahlteiler (38) optisch gekoppelt ist und eingerichtet ist, den ausgekoppelten Laserstrahl und/oder die ausgekoppelte elektromagnetische Strahlung zu erfassen.

10. Vorrichtung nach einem der Ansprüche 1 bis 9, wobei eine Strahlformungseinrichtung (32) zur Änderung des Laserstrahldurchmessers vorgesehen ist, die in Ausbreitungsrichtung des Laserstrahls vor der Parallel-Versatz-Einheit (14) angeordnet ist.

11. Vorrichtung nach einem der Ansprüche 1 bis 10, wobei eine Polarisatoreinrichtung (34) vorgesehen ist, die in Ausbreitungsrichtung des Laserstrahls vor der Parallel-Versatz-Einheit (14) und optional nach der Strahlformungseinrichtung (32) angeordnet ist.

12. Vorrichtung nach einem der Ansprüche 1 bis 11, wobei die Strahlablenkeinheit (16) zwischen der Parallel-Versatz-Einheit (14) und der Fokussiereinrichtung (18) optional unmittelbar nach der Parallel-Versatz-Einheit (14) oder optional unmittelbar vor der Fokussiereinrichtung (18), angeordnet ist.

13. Vorrichtung nach einem der Ansprüche 1 bis 12, ferner aufweisend einen Werkstückhalter (22), in dem das Werkstück (20) angeordnet und/oder gehalten ist.

14. Vorrichtung zur Lasermaterialbearbeitung nach einem der vorhergehenden Ansprüche in Kombination mit einem zu bearbeitenden Werkstück (20).

15. Verwendung einer Vorrichtung nach einem der Ansprüche 1 bis 14 zur Lasermaterialbearbeitung.

## Claims

1. Apparatus (10) for laser material processing comprising:
a beam deflecting unit (16) with at least one reflecting mirror configured as a rotating mirror or tilting mirror for deflecting a laser beam that defines a laser beam axis along a first direction relative to a surface of a workpiece (20) to be processed for path guiding the laser beam on the surface of the workpiece (20),
**characterized by**:
a parallel-offsetting unit (14) with at least three reflecting mirrors (26, 28, 30) for parallel offsetting the laser beam relative to an optical axis (oA) along a first parallel-offset direction, wherein one reflecting mirror (26) of the at least three reflecting mirrors for parallel offsetting the laser beam is rotatable and the entry reflection and the exit reflection takes place at the rotatable, reflecting mirror (26),
a further parallel-offsetting unit which is configured like the parallel-offsetting unit (14) for parallel offsetting the laser beam along a second parallel-offset direction, wherein the parallel-offsetting units are optically coupled with each other such that the laser beam may be offset in parallel along two different parallel-offset directions, and
a focusing device (18) for focusing the laser beam which has been translated in parallel by the parallel-offsetting units and deflected by the beam deflecting unit (16) onto the workpiece (20), wherein
the angle of incidence of the laser beam axis on the workpiece can be varied by adjusting the parallel offsets performed by the parallel-offsetting units in two spatial directions.

2. Apparatus according to claim 1, wherein the beam deflecting unit (16) comprises a second reflecting mirror configured as a rotating mirror or a tilting mirror and arranged downstream of the first reflecting mirror in the beam path, for deflecting the laser beam along a second direction relative to the surface of the workpiece (20) to be processed, thereby allowing a two-dimensional deflection of the laser beam for correspondingly guiding the laser beam on the surface of the workpiece (20).

3. Apparatus according to claim 1 or 2, wherein the parallel-offsetting unit (14) is configured with an even-number of stationary mirrors.

4. Apparatus according to one of claims 1 to 3, wherein the parallel-offsetting unit (14) is configured such that the laser beam is reflected four times by means of the mirror assembly.

5. Apparatus according to one of claims 1 to 4, in which the mirrors (26, 28, 30) of the parallel-offsetting unit (14) are configured such that the perpendiculars on the mirror surfaces of the mirrors of the parallel-offsetting unit (14) lie in one plane.

6. Apparatus according to one of claims 1 to 5 with a device for focus position shift (36) of the laser beam arranged in the propagation direction of the laser beam before the focusing device (18) and optionally after the beam deflecting unit (16).

7. Apparatus according to one of claims 1 to 6 with a controller (24) configured such that a synchronized control of the beam deflecting unit (16), the parallel-offsetting unit (14), the focusing device (18), a device for focus position shift (36), and/or a laser source (12) is implemented.

8. Apparatus according to one of claims 1 to 7 with a beam splitter (38) provided in the propagation direction of the laser beam before, optionally immediately before, the focusing device (18) and being configured to decouple the laser beam and/or electromagnetic radiation captured via the focusing device (18) from the beam path of the laser.

9. Apparatus according to claim 8 with a monitoring device that is optically coupled to the beam splitter (38) and that is configured to detect the decoupled laser beam and/or the decoupled electromagnetic radiation.

10. Apparatus according to one of claims 1 to 9, wherein a beam shaping device (32) for changing the laser beam diameter is provided and arranged in the propagation direction of the laser beam before the parallel-offsetting unit (14).

11. Apparatus according to one of claims 1 to 10, wherein a polarizing device (34) is provided and is arranged in the propagation direction of the laser beam before the parallel-offsetting unit (14) and optionally after the beam shaping device (32).

12. Apparatus according to one of claims 1 to 11, wherein the beam deflecting unit (16) is arranged between the parallel-offsetting unit (14) and the focusing device (18) optionally immediately after the parallel-offsetting unit (14) or optionally immediately before the focusing device (18).

13. Apparatus according to one of claims 1 to 12, further comprising a workpiece holder (22), in which the workpiece (20) is arranged and/or being held.

14. Apparatus for laser material processing according to one of the preceding claims in combination with a workpiece (20) to be processed.

15. Use of an apparatus according to any one of claims 1 to 14 for laser material processing.

## Revendications

1. Dispositif (10) pour l'usinage de matériau par laser, présentant
une unité de déflexion de faisceau (16) avec au moins un miroir réfléchissant, qui est réalisé sous forme de miroir rotatif ou basculant, pour dévier un faisceau laser, qui définit un axe de faisceau laser, le long d'une première direction par rapport à une surface d'une pièce à usiner (20) à traiter, pour le guidage de trajectoire du faisceau laser sur la surface de la pièce à usiner (20),
**caractérisé par** :
une unité de décalage parallèle (14) avec au moins trois miroirs réfléchissants (26, 28, 30) pour le coulissement parallèle du faisceau laser, par rapport à un axe optique (oA), le long d'une première direction de déplacement parallèle, un miroir réfléchissant (26) des au moins trois miroirs réfléchissants pouvant être tourné pour le déplacement parallèle du faisceau laser et la réflexion d'entrée et la réflexion de sortie ayant lieu sur le miroir réfléchissant rotatif (26),
une autre unité de décalage parallèle, qui est conçue comme l'unité de décalage parallèle (14), pour le coulissement parallèle du faisceau laser le long d'une deuxième direction de déplacement parallèle, les unités de décalage parallèle étant couplées optiquement entre elles de telle sorte que le faisceau laser puisse être décalé parallèlement le long de deux directions de décalage parallèle différentes, et
un dispositif de focalisation (18) pour focaliser sur la pièce à usiner (20) le faisceau laser déplacé en parallèle au moyen des unités de décalage parallèle et dévié au moyen de l'unité de déviation de faisceau (16), dans lequel
l'angle d'incidence de l'axe du faisceau laser sur la pièce à usiner peut être varié dans deux directions spatiales grâce au réglage des déplacements parallèles effectués au moyen des unités de décalage parallèle.

2. Dispositif selon la revendication 1, dans lequel l'unité de déviation de faisceau (16) présente un deuxième miroir réfléchissant, qui est réalisé sous forme de miroir rotatif ou basculant et qui est monté en aval du premier miroir réfléchissant dans la trajectoire du faisceau, pour dévier le faisceau laser le long d'une deuxième direction par rapport à la surface de la pièce à usiner. Le faisceau laser est dévié dans une deuxième direction par rapport à la surface de la pièce à usiner (20), ce qui permet une déviation bidimensionnelle du faisceau laser pour le guidage de trajectoire correspondant du faisceau laser sur la surface de la pièce à usiner (20).

3. Dispositif selon la revendication 1 ou 2, dans lequel l'unité de décalage parallèle (14) est réalisée avec un nombre pair de miroirs fixes.

4. Dispositif selon l'une quelconque des revendications 1 à 3, dans lequel l'unité de décalage parallèle (14) est configurée de telle sorte que le faisceau laser est réfléchi quatre fois au moyen de l'agencement de miroirs.

5. Dispositif selon l'une quelconque des revendications 1 à 4, pour lequel les miroirs (26, 28, 30) de l'unité de décalage parallèle (14) sont conçus de sorte que les normales aux surfaces de miroir des miroirs de l'unité de décalage parallèle se situent dans un plan.

6. Dispositif selon l'une quelconque des revendications 1 à 5 avec un système pour le coulissement de position focale (36) du faisceau laser, qui est disposé dans la direction de propagation du faisceau laser avant le système de focalisation (18) et éventuellement après l'unité de déflexion de faisceau (16).

7. Dispositif selon l'une quelconque des revendications 1 à 6, comprenant un dispositif de commande (24) agencé de manière à mettre en oeuvre une commande synchronisée de l'unité de déviation de faisceau (16), de l'unité de décalage parallèle (14), du dispositif de focalisation (18), d'un dispositif de déplacement de position focale (36) et/ou d'une source laser (12).

8. Dispositif selon l'une quelconque des revendications 1 à 7 avec un séparateur de faisceau (38), qui est prévu dans la direction de propagation du faisceau laser avant, éventuellement immédiatement avant, le système de focalisation (18) est conçu pour extraire le faisceau laser et/ou le rayonnement électromagnétique détecté par l'intermédiaire du système de focalisation (18) du trajet optique du laser.

9. Dispositif selon la revendication 8 avec un système d'observation, qui est couplé optiquement au séparateur de faisceau (38) et est conçu pour détecter le faisceau laser extrait et/ou le rayonnement électromagnétique extrait.

10. Dispositif selon l'une quelconque des revendications 1 à 9, dans lequel un système de formation de faisceau (32) pour la modification du diamètre de faisceau laser est prévu, qui est disposé dans la direction de propagation du faisceau laser avant l'unité de décalage parallèle (14).

11. Dispositif selon l'une des revendications 1 à 10, dans lequel un système polariseur (34) est prévu, qui est disposé dans la direction de propagation du faisceau laser avant l'unité de décalage parallèle (14) et éventuellement après le système de formation de faisceau (32).

12. Dispositif selon l'une quelconque des revendications 1 à 11, dans lequel l'unité de déflexion de faisceau (16) est disposée entre l'unité de décalage parallèle (14) et le système de focalisation (18) éventuellement immédiatement après l'unité de décalage parallèle (14) ou éventuellement immédiatement avant le système de focalisation (18).

13. Dispositif selon l'une quelconque des revendications 1 à 12, présentant en outre un porte-pièce (22), dans lequel la pièce (20) est disposée et/ou retenue.

14. Dispositif pour l'usinage de matériau par laser selon l'une quelconque des revendications précédentes en combinaison avec une pièce (20) à usiner.

15. Utilisation d'un dispositif selon l'une des revendications 1 à 14 pour l'usinage de matériau par laser.
